# EUROPEAN PATENT APPLICATION

(11) **EP 1 408 568 A1**
(43) Date of publication of application: **14.04.2004**
(21) Application number: 03253640.1
(22) Date of filing: 10.06.2003
(51) Int. Cl.: H01M 4/86, H01M 4/88

(54) **Method for fabricating high surface area catalysts in fuel cell electrodes**

(30) Priority: 25.06.2002 US 180419
(71) Applicant: Hewlett-Packard Development Company, L.P., Houston, TX 77070 (US)
(72) Inventor: Champion, David, Lebanon, OR 97355 (US)
(74) Representative: Jackson, Richard Eric

(57) **Abstract**

A method of increasing the surface area of a fuel cell catalyst (103) by forming free standing elements (106) of a catalytic material in a fuel cell electrode.

## Description

### FIELD OF THE INVENTION

The present invention relates to the field of fuel cell electrodes. More particularly, the present invention relates to a method for fabricating high surface area catalysts on the surface of electrodes.

### BACKGROUND OF THE INVENTION

Over the past century the demand for energy has grown exponentially. With the growing demand for energy, many different energy sources have been explored and developed. One of the primary sources of energy has been, and continues to be, the combustion of hydrocarbons. However, the combustion of hydrocarbons usually results in incomplete combustion and non-combustibles that contribute to smog and other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point that many speculate that fuel cells will soon compete with the gas turbine generating large amounts of electricity for cities, the internal combustion engine powering automobiles, and batteries that run a variety of small and large electronics.

Fuel cells conduct an electrochemical energy conversion of hydrogen and oxygen into electricity and heat. Fuel cells are similar to batteries, but they can be "recharged" while providing power.

Fuel cells provide a DC (direct current) voltage that may be used to power motors, lights, or a variety of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

In general, a fuel cell includes the following basic elements: an anode, a cathode, an electrolyte, and a catalyst arranged on a membrane or substrate structure. One of the key structural attributes of an efficient/high performing fuel cell is the surface area of these electrodes available promoting catalytic reactions. Element composition may vary in each of the above-mentioned varieties of fuel cell.

The anode is the negative post of the fuel cell and may conduct electrons that are freed as hydrogen molecules are turned into hydrogen ions such that the electrons can be used as a current in an external circuit. The anode needs to be able to disperse the hydrogen gas as evenly as possible over the surface of the catalyst.

The cathode is the positive post of the fuel cell and similarly, is designed to evenly distribute oxygen (usually air) to the surface of the catalyst. The cathode may also conduct the electrons back from the external circuit to the catalyst, where they can recombine with the hydrogen ions and oxygen to form water.

Increased surface area per unit volume allows fuel cell structures to decrease in size while still providing equivalent power. Traditional planar electrodes provide only a basic two-dimensional surface area on which a catalyst may be deposited. Consequently, in order to produce the required quantities of power, traditional fuel cells must often be large and cumbersome.

Catalysts are usually most cost effective when they expose a maximum amount of surface area to the fuel source. Available surface area can also affect device start up. By maximizing available surface area, the electrode can more rapidly reach the elevated temperatures necessary for most fuel cell reactions.

### SUMMARY OF THE INVENTION

The present invention provides, among other things, a method of increasing surface area of a fuel cell catalyst by forming free standing elements in a fuel cell electrode that bare a catalytic material.

### BRIEF DESCRIPTION OF THE DRAWINGS

The foregoing and other features and aspects of the invention will become further apparent upon reading the following detailed description and upon reference to the drawings in which:

FIG. 1 is an unassembled perspective view of a conventional PEM fuel cell apparatus.

FIG. 2 is a cut-away view of a base layer substrate and deposited sacrificial material in the electrode creation process.

FIG. 3 is a cut-away view of a patterned sacrificial material and base layer substrate in the electrode creation process according to an embodiment of the present invention.

FIG. 4 is a cut-away view of a deposited catalyst on a pattemed sacrificial material and base layer substrate in the electrode creation process according to an embodiment of the present invention.

FIG. 5 is a cut-away view of protruding catalyst structures on a base layer substrate in the electrode fabrication process according to an embodiment of the present invention.

FIG. 6 is a cut-away view of protruding catalyst structures on opposing sides of a base layer substrate in the electrode fabrication process according to an embodiment of the present invention.

FIG. 7 is a flowchart illustrating a method of creating the systems illustrated in FIG. 5 and FIG. 6 according to an embodiment of the present invention.

Throughout the drawings, identical reference numbers designate similar, but not necessarily identical elements.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF THE EMBODIMENTS

In one embodiment, the present invention provides a method of fabricating a high surface area catalyst on a surface of an electrode for use in a fuel cell. More particularly, a method according to principles of the present invention provides for creating protruding catalyst elements on the surface of an electrolyte to increase the surface area of the catalyst and, thereby, the efficiency of the catalytic reaction.

The fabricated high surface area catalyst may allow a fuel cell to maximize the catalyst surface area of an anode or cathode in order to maintain a desired level of power generation while reducing the size of the electrode. Moreover, the parts of the catalyst that are protruding will tend to heat more rapidly due to thermal conduction, improving fuel cell startup performance.

The invention may be exploited in a variety of fuel cell types. For example, proton exchange membrane fuel cells, solid oxide fuel cells, phosphoric acid, and other derivatives of these fuel cells will benefit from the techniques of the present invention. Included subsequently are brief descriptions of those fuel cells that may be particularly relevant to the present invention.

### PEM Fuel Cells

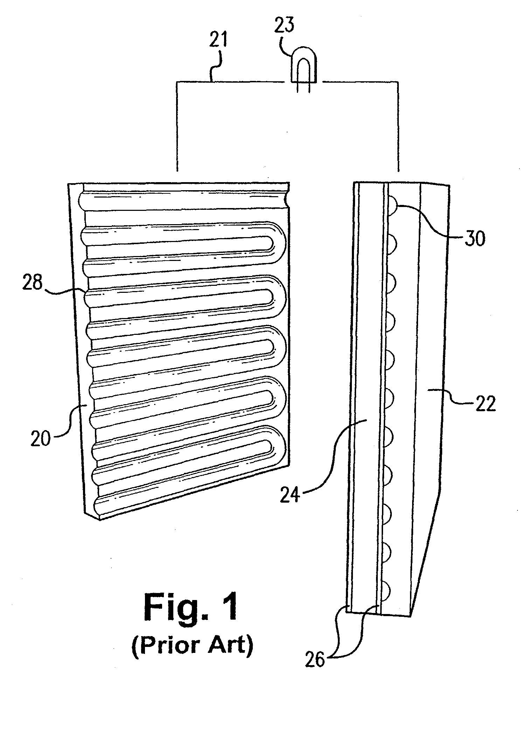

The PEM fuel cells are currently believed to be one of the most promising portable fuel cell technologies and use one of the simplest reactions of any fuel cell. Referring to FIG. 1, a PEM fuel cell will typically include four basic elements: an anode (20), a cathode (22), an electrolyte (PEM) (24), and a catalyst (26) arranged on each side of the electrolyte (24). In this exemplary embodiment of the present invention, the electrolyte (24) is a PEM. However, in other embodiments of the present invention, the electrolyte could alternatively include carbonate salts, a dilute aqueous solution of methanol or a hard ceramic electrolyte.

Anode (20) is the negative post of the fuel cell and conducts electrons that are freed from hydrogen molecules such that the electrons can be used as a current in an external circuit (21). The anode (20) includes channels (28) etched therein to disperse the hydrogen gas as evenly as possible over the surface of the catalyst (26). By giving up electrons, the hydrogen molecules become hydrogen ions.

The cathode (22) is the positive post of the fuel cell, and has channels (30) etched therein to evenly distribute oxygen (usually air) to the surface of the catalyst (26). The cathode (22) also conducts the electrons back from the external circuit (21) to the catalyst (26), where they can recombine with the hydrogen ions and oxygen to form water. Under ideal conditions water is the only by-product of the PEM fuel cell.

The electrolyte is the proton exchange membrane (PEM) (24). The PEM (24) is a specially treated porous material that conducts only positively charged ions. The PEM (24) prevents the passage of electrons.

The catalyst (26) is typically platinum particles thinly coated onto carbon paper or cloth. The catalyst (26) is usually rough and porous so as to increase the surface area of the platinum that can be exposed to the hydrogen or oxygen. However, it would be desirable to further increase catalyst surface area without increasing the dimensions of the catalyst. The catalyst (26) facilitates the reaction of oxygen and hydrogen.

In a working fuel cell, the PEM (24) is sandwiched between the anode (20) and the cathode (22).

The operation of the fuel cell can be described generally as follows. Pressurized hydrogen gas (H₂) enters the fuel cell on the anode (20) side. When an H₂ molecule comes into contact with the platinum catalyst (26), it splits into two H+ ions and two electrons (e⁻). The electrons are conducted through the anode (20), where they make their way through the external circuit (21) that may be providing power to do useful work (such as turning a motor or lighting a bulb (23)) and return to the cathode side (22) of the fuel cell.

Meanwhile, on the cathode (22) side of the fuel cell, oxygen gas (0₂) is being forced through the catalyst (26). In some PEM fuel cell systems the O₂ source may be air. As O₂ is forced through the catalyst (26), it forms two oxygen atoms, each having a strong negative charge. This negative charge attracts the two H⁺ ions through the PEM (24), where they combine with an oxygen atom and two of the electrons from the external circuit to form a water molecule (H₂O).

The PEM fuel cell reaction just described produces only about 0.7 volts; therefore, to raise the voltage to a more useful level, many separate fuel cells are often combined to form a fuel cell stack.

PEM fuel cells typically operate at fairly low temperatures (about 80° C/176^{°} F), which allows them to warm up quickly and to be housed in inexpensive containment structures because they do not need any special materials capable of withstanding the high temperatures normally associated with electricity production.

### Solid Oxide Fuel Cells

A solid oxide fuel cell (SOFC) uses a hard ceramic electrolyte instead of a liquid and operates at temperatures up to 1,000 degrees C (about 1,800 degrees F). A mixture of zirconium oxide and yttrium oxide form a crystal lattice electrolyte. Other oxide combinations have also been used as electrolytes. One skilled in the art will recognize that a variety of electrode and electrolyte materials may be exploited for use with the invention. For example, cubic fluorites such as Sm or Gd doped CeO₂ or yttria-stabilized zirconia (YSZ, *e.g.,* 8 mole%), doped perovskite oxides such as La_{0.9}Sr_{0.1}Ga_{0.8}Mg_{0.2}O₃, proton conducting perovskites such as BaZrO₃, SrCeO₃, and BaCeO₃, other proton exchange ceramics.

Metallic cathodes and anodes, e.g., silver and nickel, may be employed with the electrolytes described above. In addition to metallic materials, cermets such as Ni-YSZ, Cu-YSZ (catalyst-electrolyte), or Ni or Cu modified doped ceria (SDC, *e.g.,* Ce_{0.8}Sm_{0.2}O_{1.9}, Ce_{0.9}Gd_{0.1}O_{1.9}) may be employed as anodes. Exemplary cathodes may include, but are not limited to doped perovskites such as Sm_{0.5}Sr_{0.5}CoO₃, Ba_{0.8}La_{0.2}CoO₃, and Gd_{0.5}Sr_{0.5}CoO₃. The B sites (previously occupied by Co atoms) of these perovskites may also be doped, for example, with Fe or Mn.

The electrolyte, cathode, and anode may be porous or dense. As used herein, a dense material has at least 80% of its theoretical density. The solid electrolyte is coated on both sides with specialized porous electrode materials. However, current SOFC electrodes do not maximize the surface area of the electrodes to increase efficiency.

At the high operating temperature, negative oxygen ions migrate through the crystal lattice. When a fuel gas containing hydrogen is passed over the anode, a flow of negatively charged oxygen ions moves across the electrolyte to oxidize the fuel. The oxygen is supplied, usually from air, at the cathode. Electrons generated at the anode travel through an external load to the cathode, completing the circuit and supplying electric power along the way. The power generating efficiency of an SOFC can range up to about 60 percent.

In one configuration, the SOFC consists of an array of tubes. Another variation includes a more conventional stack of disks.

### Phosphoric Acid Fuel Cells

Phosphoric acid fuel cells (PAFC) operate at temperatures of around 150 to 200° C (about 300 to 400° F). As the name suggests, PAFC's use phosphoric acid as the electrolyte. Positively charged hydrogen ions migrate through the electrolyte from the anode to the cathode. Electrons generated at the anode travel through an external circuit providing electric power along the way before returning to the cathode. There the electrons, hydrogen ions and oxygen form water, which is expelled from the cell. A platinum catalyst at the electrodes facilitates the reactions.

### Description of Preferred and Alternative Embodiments of the Invention

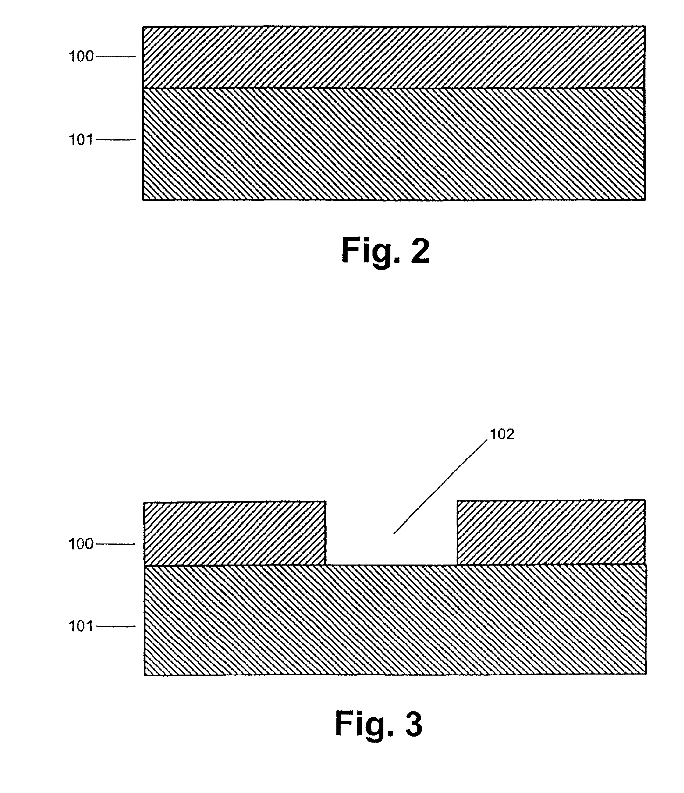

Referring next to FIG. 2, a cut-away view of a substrate and a sacrificial material according to one embodiment of the present invention are shown. The substrate may be any material that allows the deposition of additional materials on its surface. A ceramic electrolyte (101) is the preferred embodiment of the substrate because the present invention may be particularly useful for solid oxide fuel cells that typically employ ceramic electrolyte substrates. The ceramic electrolyte (101) is discussed at sufficient length in the aforementioned SOFC description.

The sacrificial material may be any material that allows patterning over the surface of the ceramic electrolyte (101). According to the embodiment in FIG. 2, the sacrificial material is a photoresist (100). Alternatively, the sacrificial material could be any material that is easily patterned.

Consequently, the layer of photoresist (100) is deposited on the ceramic electrolyte (101) as shown in Fig. 2. The photoresist (100), as will be explained below, may then be patterned to facilitate the creation of catalyst protrusions on the ceramic electrolyte (101) thereby increasing the catalyst surface area.

FIG. 3 shows the ceramic electrolyte (101) and a pattern (102) formed within the photoresist (100). This pattern is preferable formed by selectively exposing a photoresist (100) to electromagnetic radiation, e.g., ultraviolet light, and then selectively removing either the exposed or unexposed portions with a solvent.

In one embodiment, the photoresist (100) may be selectively exposed to ultraviolet light according to the desired pattern. The exposure to ultraviolet light chemically changes the exposed portions of the photoresist (100). The ceramic electrolyte (101) and the photoresist (100), both the exposed and unexposed portions, may then be bathed in a solvent that dissolves only the exposed portions, leaving the ceramic electrolyte (101) and unexposed photoresist (100) (in the case of a positive photoresist process). The unexposed photoresist (100) then has the desired pattern formed therein.

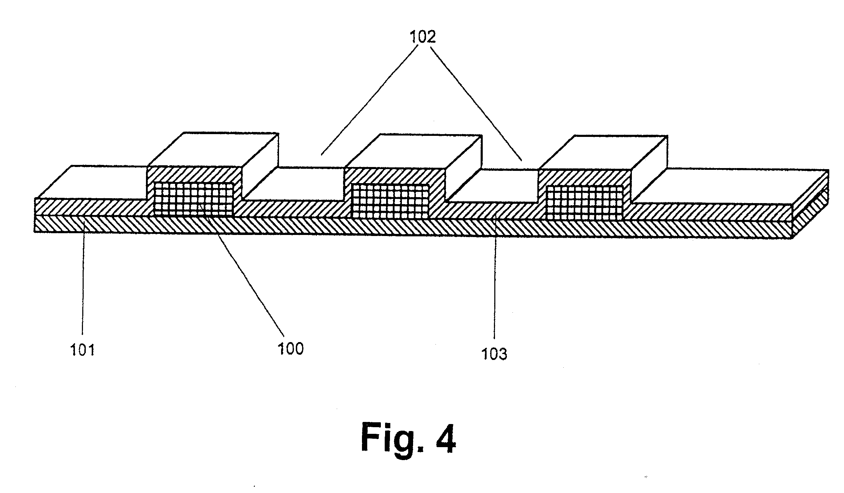

Turning next to FIG. 4, another step in the process of creating a high surface area catalyst is shown. FIG. 4 shows the photoresist (100), the ceramic electrolyte (101), and a pattern (102) within the photoresist (100). A layer of catalytic film (103) is deposited over the surfaces of the patterned photoresist (100) and the ceramic electrolyte (101). The catalyst (103) may comprise silver, copper, nickel, noble metals, ceramic metals or any other material that may facilitate the reaction of the reactive elements in a fuel cell. The catalyst (103) may be deposited in a number of ways, including, but not limited to: thin film deposition, sputtering, chemical vapor deposition, or other methods that may be familiar to those skilled in the art.

After depositing the catalyst (103) on the ceramic electrolyte (101) and the photoresist (100), the elements shown in FIG. 4 are bathed in a solvent, preferably an agitated solvent solution. This solvent solution may include, for example, acetone. In this embodiment, only the photoresist (100) is soluble in the solution. The deposited catalytic film (103) is preferably porous enough to enable the solvent solution to penetrate to, and dissolve, the photoresist (100) the remains. This solvent solution is typically different from the solution used to pattern the photoresist (100) as described above. The solvent solution preferably causes the photoresist (100) to expand as it is dissolved. The photoresist (100) is removed in this process, as well as, perhaps, a portion of the catalyst (103) at the interface between the photoresist (100) and the catalyst (103). With most solvents, the different elements are bathed for no more than about two minutes. Similar results may be obtained in different processes by bathing the different elements for no more than about one minute. This contrasts with current micro-electromechanical systems (MEMS) integrated circuit (lC), and other lift off processes that may take a much greater amount of time where the desired end result is not to have any protruding elements remain.

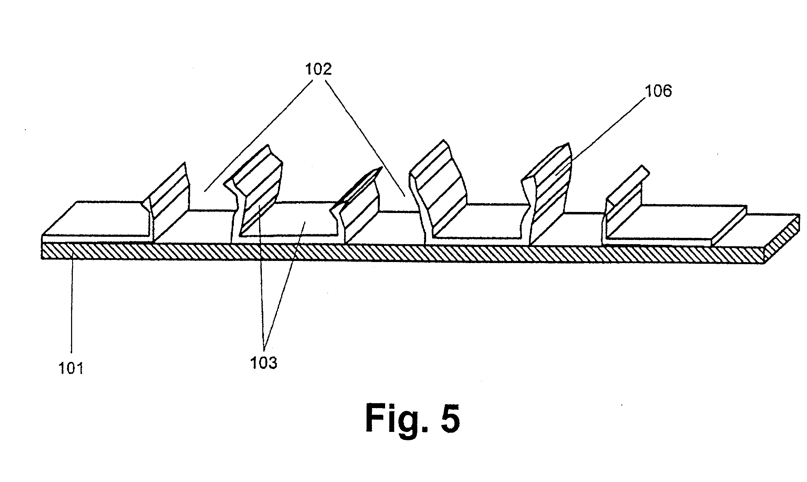

In addition, because of the expansion of the photoresist (100) as it absorbs the agitated bath solution, the catalyst (103) material may fracture, leaving a number of protruding elements as shown in FIG. 5. These "protruding elements" may be any catalyst (103) structure, free standing or not, that protrude from the surface of the ceramic electrolyte (101).

The remaining elements may then be rinsed and dried. Rinsing off the substrate and remaining elements is preferably performed with, for example, isopropyl alcohol. The drying step may be performed by, for example, air drying the remaining elements.

The irregularly shaped protruding elements are shown in the present embodiment as flags (106). The flags (106) may be spaced along the ceramic electrolyte (101) as shown, or in other configurations. The flags (106) may be the residual materials from the catalyst (103) deposited over the ceramic electrolyte (101) and the photoresist (100). Additionally, the flags (106) advantageously increase the surface area available for the catalytic reaction necessary for fuel cells without increasing the planar surface area of the ceramic electrolyte (101). In some embodiments the flags (106) may increase the surface area of the catalyst (103) at least about 5% or 10%. In some embodiments the flags (106) have increased the surface area by at least about 15%, 20% or more.

The flags (106) shown in FIG. 5 are undesirable in the MEMS and 1C industries, and therefore prevented from remaining according to conventional lift-off processes by leaving products immersed in a solvent bath for a time sufficient to remove flags. However, according to the present embodiment of a fuel cell electrode, the flags (106) are desirable and facilitated by the method described herein.

The flags (106) may reach a height measurement of, for example, up to 50 times the thickness of the catalyst deposit (103). The flags are preferably at least twice as long as the thickness of the catalyst deposit (103). The height of the flags may, in some cases, approach about 10 *µm;* in most present experiments the average height has been about 5 µm. However, while immersed in the agitated bath, the flags (106) created according to the present invention may bend or fall, rendering them nearly parallel or parallel to the ceramic electrolyte (101). The flags (106) may thus be varying shapes and disposed at different angles because of the expansion process that the photoresist (100) undergoes as it is dissolved.

The flags or protruding structures are preferably 1 to 10 µm in length. In some embodiments, the flags or protruding structures are 3 to 8 µm in length. In other embodiments, the flags or protruding structures are 5 to 7 µm in length.

As will be appreciated by those skilled in the art, the pattern (102) created on the ceramic electrolyte (101) and photoresist (100; FIG. 4) increases the surface area of the catalyst (103) beyond what would be the case if the catalyst (103) were deposited directly on the flat surface of the ceramic electrolyte (101). Consequently, the catalyst (103) is more efficient in promoting the chemical reactions of the fuel cell because more catalyst (103) surface area is presented to the reactants.

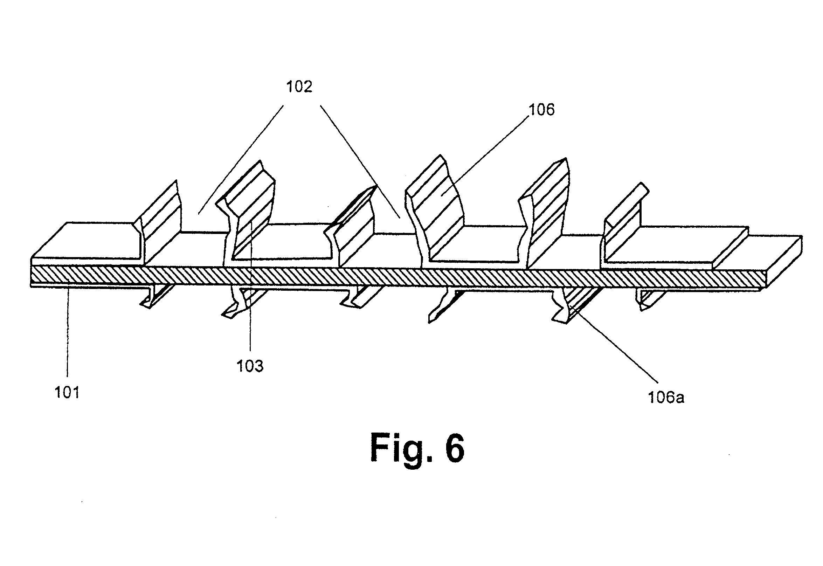

Referring next to FIG. 6, another embodiment according to the present invention is shown. The embodiment of FIG. 6 may include the same elements as those described in FIG. 5. Additionally, FIG. 6 shows an embodiment where there may be flags (106a) baring catalytic material created on the both surfaces of the ceramic electrolyte (101) by methods similar or identical to those described above. With the flags (106a) on both surfaces of the ceramic electrolyte (101), the available surface area of the catalyst (103) is again increased, thereby further promoting the reaction occurring within the target fuel cell.

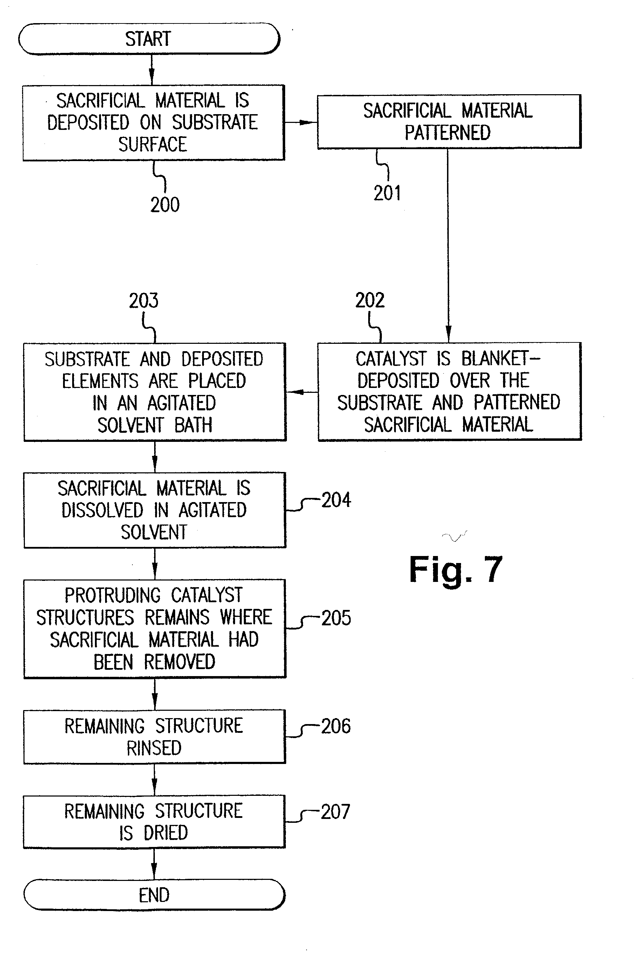

FIG. 7 is a flowchart that illustrates one method by which the high surface area catalyst of FIGs. 5 and 6 may be fabricated. It is important to note that this process may be incorporated into previous or future electrode catalyst designs to further improve efficiency without changing the electrode shape or size. The process may begin with a sacrificial material being deposited on a substrate surface (200). The term "deposited" may mean any method that adheres a material to an exposed surface as described previously.

Independent of the substrate, the sacrificial material may then be patterned (201). Patterning may occur by exposing the sacrificial material to ultraviolet light in a pattern and immersing the substrate and sacrificial material in a solution bath as described above.

A catalyst may then be deposited over the substrate and remaining sacrificial material (202) as shown in FIG. 4. The catalyst may comprise silver, copper, nickel, noble metals, ceramic metals, or any other material that facilitates the reaction of the reactive elements in a fuel cell.

The process may continue by placing the substrate and deposited elements in an agitated solvent bath (203). Agitation may occur ultrasonically, mechanically, or by other means that encourages the solvent and soluble materials to interact. The preferred method of agitation is ultrasonic, which has been used to effectively lift-off the sacrificial material at varying frequencies. It will, however, be understood that in some embodiments the catalyst, sacrificial material, and substrate may be immersed in a solvent bath without agitation. Any solvent known to dissolve the sacrificial material while leaving the desired materials intact may be used.

As the different elements are exposed to the solvent in the agitated bath as represented by box (204), the sacrificial material is dissolved. Consequently, flags are formed from the catalyst deposited on the sacrificial material as the sacrificial material adjacent to the catalyst layer expands and then dissolves (204). Any suitable solvent that does not removed the desired elements while still removing the chosen sacrificial material is reasonable

After the electrode has been removed from the bath, protruding elements or flags formed from the catalyst deposit may remain (205). The illustration in FIG. 5 more clearly shows the type of protruding catalyst structures (106;FIG. 5) formed from the catalyst that remains (205).

Following removal of the electrode from the solvent bath the remaining structure may be rinsed (206). Rinsing allows residual materials from the solvent bath to be rinsed off of the substrate and protruding catalyst structures. The rinsing may be performed, for example, with isopropyl alcohol.

The method may continue to a drying step (207), e.g., air drying. The drying step (207) may allow enduring liquids on the substrate and catalyst to be evaporated and the protruding catalyst structures to further solidify.

The process illustrated in the flow chart of FIG. 7 may also be used to fabricate the electrode shown in FIG. 6. The only difference may be that the steps shown and described with reference to FIG. 7 are completed on opposing surfaces of the substrate to form protruding catalyst structures on both sides of the substrate (106,106a; FIG. 6).

The preceding description has been presented only to illustrate and describe the invention. It is not intended to be exhaustive or to limit the invention to any precise form disclosed. Many modifications and variations are possible in light of the above teaching.

The embodiments shown were chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A method of increasing surface area of a fuel cell catalyst comprising:
forming free standing elements (106) in a fuel cell electrode that bare a catalytic material (103).

2. The method of claim 1, wherein said electrode comprises an electrolyte (101) for a solid oxide fuel cell.

3. The method of claim 3, wherein said electrolyte (101) for said solid oxide fuel cell comprises an ion conductor.

4. The method of claims 1 to 3, further comprising forming free standing elements (106) that are at least twice as long from said electrolyte (101) as a layer thickness of said fuel cell catalytic material (103).

5. A method of creating protruding elements (106) on a surface of a substrate (101) for a fuel cell comprising:
depositing a soluble sacrificial material (100) on said substrate (101);
creating a pattern (102) in said soluble sacrificial material (100);
depositing a catalytic film (103) on said soluble sacrificial material (100);
wherein at least a portion of said catalytic film (103) protrudes from a surface of said substrate (101),
immersing said substrate (101) in a bath to remove said soluble sacrificial material (100), and
leaving said at least a portion of the catalytic film (106) protruding from said substrate (101).

6. The method of claim 5, further comprising forming an electrolyte for a solid oxide fuel cell using said substrate (101).

7. The method of claim 5 to 6, wherein said soluble sacrificial material (100) comprises a photoresist and said creating a pattern (102) further comprises selectively exposing said photoresist to electromagnetic radiation.

8. The method of claims 5 to 7, wherein said immersing said substrate (101) in a bath further comprises immersing said substrate (101) for about two minutes or less.

9. The method of claims 5 to 8, wherein said depositing said catalytic film (103) further comprises depositing one or more noble metals.

10. A fuel cell electrode apparatus comprising:
a substrate (101); and
a deposit catalyst material (103) deposited on said substrate (101);
wherein at least a portion of said deposited catalyst material (103) remains as a protruding structure (106) from said substrate (101).

11. The fuel cell electrode apparatus of claim 10, wherein said substrate (101) comprises an electrolyte for a solid oxide fuel cell.

12. The fuel cell electrode apparatus of claims 10 to 11, wherein said protruding structures (106) protruding from the substrate (101) have a height at least twice that of a depth of the deposited catalytic material (103).
